# EUROPÄISCHE PATENTANMELDUNG

(11) **EP 0 683 139 A2**
(43) Veröffentlichungstag der Anmeldung: **22.11.1995**
(21) Anmeldenummer: 95107304.8
(22) Anmeldetag: 15.05.1995
(51) Int. Cl.: C02F 3/30, G05B 13/00

(54) **Verfahren zum Reinigen von Abwasser mittels Belebtschlamm**

(30) Priorität: 17.05.1994 DE 4417259
(71) Anmelder: BFI ENTSORGUNGSTECHNOLOGIE GmbH, D-40883 Ratingen (DE)
(72) Erfinder: Kaiser, Dieter Dr., D-44357 Dortmund (DE)

(57) **Zusammenfassung**

Die vorliegende Erfindung betrifft ein Verfahren zum Reinigen von Abwasser mittels Belebtschlamm, wobei eine Messung der Sauerstoffkonzentration im Klärbecken erfolgt und das Abwasser durch Zu- und Abschalten einer Belüftung einer Nitrifikations- und einer Denitrifikationsphase unterworfen wird. Für ein zuverlässiges Einhalten der Ablaufwerte für das Abwasser und einen optimalen Sauerstoffeintrag in das Klärbecken ist vorgesehen, daß die Belastung des Abwassers aus einer Analyse des Verlaufs der Sauerstoffkonzentration und der dem Verlauf zugeordneten Belüftungsleistung ermittelt und die Nitrifikations- und/oder die Denitrifikationsphase in Abhängigkeit der ermittelten Belastung gesteuert wird. Ferner wird ein Verfahren zur Steuerung einer Denitrifikationsphase bei einer biologischen Abwasserreinigung in einem Klärbecken angegeben.

## Beschreibung

Die vorliegende Erfindung betrifft ein Verfahren zum Reinigen von Abwasser mittels Belebtschlamm nach dem Oberbegriff des Anspruchs 1.

Bei Kläranlagen mit einer biologischen Reinigungsstufe wird das Abwasser durch eine Nitrifikation und eine Denitrifikation von Stickstoffverbindungen befreit. Während in einer Nitrifikationsphase eine überwiegend durch den biologischen Sauerstoffbedarf (BSB) bestimmte und unter anderem durch Ammonium hervorgerufene Belastung des Abwassers durch einen Abbau von Ammonium zu Nitrat abgesenkt wird, wird das im Abwasser vorhandene Nitrat in einer anschließenden Denitrifikationsphase abgebaut. Um den Stickstoffeintrag in Gewässer zu begrenzen, unterliegen die Ablaufwerte einer Kläranlage für Stickstoffverbindungen entsprechenden Grenzwerten. Zur Einhaltung dieser Grenzwerte müssen die beiden Phasen aufeinander abgestimmt und gesteuert werden, wobei ein Sauerstoffeintrag über eine Belüftung in der Nitrifikationsphase für einen ausreichend langen Zeitraum aufrechtzuerhalten und in der Denitrifikationsphase für einen ausreichend langen Zeitraum zu unterbrechen ist.

Während bei Kläranlagen mit intermittierendem Betrieb eines Klärbeckens der Sauerstoffeintrag in das gesamte Klärbecken erfolgt oder unterbrochen wird, wird bei einem simultanen Betrieb eine Zeitdauer für eine Phase über das für die Phase zur Verfügung gestellte Volumen variiert, wobei eine örtlich über das Klärbecken verteilte Belüftung entsprechend zu- bzw. abgeschaltet wird. Hierbei muß die Zeitdauer für eine Phase in Form einer im wesentlichen von einem Rücklaufverhältnis zwischen Abwasserzulauf und rückgeführtem Überlauf sowie von der Belastung des Abwassers abhängigen Verweil- oder Raumzeit berücksichtigt werden.

Eine Steuerung derartiger Verfahren über BSB-, Ammonium- oder Nitratmeßgeräte ist mit einem erheblichen Kostenaufwand verbunden. Zudem erfordern derartige Meßgeräte einen relativ hohen Wartungsaufwand.

Zur Vermeidung dieser Nachteile wurde vorgeschlagen, die Phasen mit fest vorgegebenen Zeiten ablaufen zu lassen.

Aus der WO 83 00 143 ist ein Verfahren zum Reinigen von Abwasser mittels Belebtschlamm bekannt, wobei eine Messung der Sauerstoffkonzentration im Klärbecken erfolgt und das Abwasser durch Zu- und Abschalten einer Belüftung einer Nitrifikations- und einer Denitrifikationsphase unterworfen wird. Hierbei wird nach einer Abschaltung der Belüftung zur Beendigung der Nitrifikationsphase eine Sauerstoffmessung im Abwasser über eine kurze Zeit vorgenommen und aus diesen Werten eine Steigung der Sauerstoffänderungsfunktion im Abklingbereich ermittelt. Von dem Grad einer derartig ermittelten Steigung wird auf die Zeitdauer der Denitrifikationsphase geschlossen. Die Denitrifikationsphase wird bei dem bekannten Verfahren in der Weise gesteuert, daß der Beginn auf den Zeitpunkt eines Unterschreitens eines Schwellwertes der Sauerstoffkonzentration festgelegt und nach Ablauf der fest vorgegebenen Zeitdauer wieder Sauerstoff über die Belüftung in das Klärbecken eingetragen wird. Alternativ zur Messung im Abklingbereich wird eine Messung im Anfahrbereich der Nitrifikationsphase zur Bestimmung der Zeitdauer für die Denitrifikationsphase vorgeschlagen.

Aufgrund der bereits vor oder mit Beginn einer Phase festgelegten Zeitdauer kann mit einem derartigen Verfahren nur unzureichend auf Belastungsschwankungen im Abwasser reagiert werden, so daß in belastungsstarken Zeiten kein zuverlässiges Einhalten der Ablaufwerte für das Abwasser gewährleistet ist und in belastungsschwachen Zeiten ein unnötig hoher Sauerstoffeintrag in das Klärbecken erfolgt und die Betriebskosten für die Belüftung erhöht.

Aufgabe der vorliegenden Erfindung ist es, ein Verfahren nach dem Oberbegriff des Anspruchs 1 anzugeben, das ein zuverlässiges Einhalten der Ablaufwerte für das Abwasser gewährleistet und einen optimalen Sauerstoffeintrag in das Klärbeckens ermöglicht.

Diese Aufgabe wird entsprechend dem kennzeichnenden Teil des Anspruchs 1 gelöst.

Dadurch, daß die Belastung des Abwassers aus einer Analyse des Verlaufs der Sauerstoffkonzentration und der dem Verlauf zugeordneten Belüftungsleistung ermittelt wird, ist eine lastabhängige Steuerung der Phasen mit einem optimalen Sauerstoffeintrag in das Klärbecken ermöglicht. Der Verlauf der Sauerstoffkonzenztration wird bevorzugt on-line analysiert bzw. ermittelt. Durch die Steuerung der Nitrifikations- und/oder der Denitrifikationsphase in Abhängigkeit der ermittelten Belastung ist ein zuverlässiges Einhalten der Ablaufwerte für das Abwasser gewährleistet. Auf diese Weise ist eine Überleitung von der einen zu der anderen Phase bei Erreichen von jeweils vorgebbaren Belastungsgrenzwerten ermöglicht. Durch eine mehrmalige Ermittlung der Belastung während einer Phase können Lastwechsel erkannt und ein Trend der Belastung ermittelt werden. Zweckmäßigerweise wird durch die Analyse, ein steigendes, fallendes oder gleichbleibendes Verhalten der Sauerstoffkonzentration festgestellt. Hierbei werden vorteilhaft Sauerstoffkonzentrationsmessungen mit einer vorgebbaren Abtastfrequenz vorgenommen und jeweils die Steigung für ein Intervall bestimmt. Durch einen Vergleich von Steigungen in aufeinander folgenden Intervallen kann das Verhalten der Sauerstoffkonzentration beurteilt werden. Ferner kann die Steigung der Sauerstoffkonzentration bestimmt und mit der zugeordneten Belüftungsleistung zu einem Prozeßzustand zusammengefaßt werden. Zweckmäßigerweise wird ein die Belastung beschreibender momentaner Prozeßzustand mit einer Vielzahl von Prozeßzuständen mit jeweils bekannten Ablaufwerten für das gereinigte Abwasser, wie BSB, Ammonium, Nitrat und gegebenenfalls Nitrit zur Ermittlung von Stellgrößen korreliert. Eine Vielzahl der Prozeßzustände kann durch eine Beobachtung bzw. durch ein Speichern gemessener Größen über einen angemessenen Zeitraum bereitgestellt werden. Zweckmäßigerweise umfaßt dieser Zeitraum eine Vielzahl von Phasen, wobei ein breites Spektrum von Prozeßzuständen abgedeckt wird. Bevorzugt werden die Vielzahl der Prozeßzustände in einzelne Klassen unterteilt. Eine Klasse enthält hierbei einander in Bezug auf die Sauerstoffkonzentration, die Gebläseleistung und/oder andere Meßgrößen ähnliche Prozeßzustände. Eine andere Klasse kann eine Folge von Prozeßzuständen enthalten, wobei sich deren zeitliche Abfolge im wesentlichen gleicht.

Zur Analyse und Ermittlung der Belastung sowie Bildung von Klassen ähnlicher Prozeßzustände und Abfolgen von Prozeßzuständen sind eine numerische Bilanzierung eines Klärbeckens, eine Fuzzy-Daten-Analyse und eine Signalklassifikation mit Hilfe neuronaler Netze besonders geeignet.

Durch eine Einstellung des Sauerstoff-Sollwertes für die Nitrifikationsphase in Abhängigkeit der ermittelten Belastung läßt sich der Sauerstoffeintrag durch die Belüftung optimieren. Hierbei kann die Gebläseleistung in belastungsschwachen Zeiten durch ein Absenken des Sauerstoff-Sollwertes zusätzlich abgesenkt bzw. minimiert werden.

Durch eine Analyse einer Sprungantwort der Sauerstoffkonzentration auf kurzzeitiges Zuschalten der Belüftung in der Denitrifikationsphase kann die Belastung in dieser Phase überwacht werden. Ein kurzzeitiges Zuschalten auf ein niedriges Belüftungsniveau läßt die Denitrifikationsphase hierbei weitgehend unbeeinflußt und ermöglicht zu einer Analyse dienende Messungen. Nach einer kurzzeitigen Sauerstoffeinleitung sind in dieser Phase kleine, im wesentlichen dreieckförmige Peaks der Sauerstoffkonzentration meß- und beobachtbar, deren Zunahme, Abnahme, Höhe oder auch Kombinationen hiervon für eine Steuerung ausgewertet werden können. Zu Beginn der Denitrifikationsphase zeigt sich ein rascher Anstieg, ein relativ hoher Konzentrationswert und ein langsamer Abfall eines Peaks. Zum Ende dieser Phase wird der Anstieg dann flacher, die Konzentrationswerte niedriger und der Abfall eines Peaks steiler. Derartige Peaks sind trotz relativ grober Messungen feststellbar und können zur Steuerung des Übergangs der Denitrifikation zur Nitrifikation vorteilhaft genutzt werden. Hierbei ist die Messung nicht auf einen Einsatz von hochempfindlichen Meßvorrichtungen angewiesen.

Ferner ist durch eine Messung von Volumenstrom und Leitfähigkeit des Abwasserzulaufs und Vergleich mit bekannten Werten eine Überwachung der Belastung in der Denitrifikationsphase ermöglicht. Hierbei werden die Meßwerte vorteilhaft einem Prozeßzustand zugeordnet oder in diesen mit einbezogen. Zusätzlich kann die Umgebungstemperatur zur Korrektur von Leitfähigkeitsmessungen erfaßt und verglichen werden. Durch ein Erfassen von Werten für den Volumenstrom und die Leitfähigkeit des Abwasserzulaufs und ein Zuordnen von beispielsweise durch Laboruntersuchung bestimmten Werten für Ammoniumkonzentrationen läßt sich ein zur Überwachung geeignetes Kennfeld erstellen. Über eine Einordnung gemessener Werte für Volumenstrom und Leitfähigkeit in ein derartig aufgebautes Kennfeld kann eine Akkumulation von Ammonium hergeleitet werden. Zweckmäßigerweise wird die Denitrifikationsphase bei Überschreiten eines aus dem Volumenstrom und der Leitfähigkeit des Abwassers hergeleiteten Akkumulationswertes für die Belastung abgebrochen.

Weitere Ausgestaltungen der Erfindung sind der nachfolgenden Beschreibung und den Unteransprüchen zu entnehmen.

Die Erfindung wird nachstehend anhand eines Ausführungsbeispiels einer Kläreinrichtung mit intermittierender Betriebsweise näher erläutert.

Fig. 1 zeigt schematisch eine Ausführungsform einer Kläreinrichtung.

Fig. 2 zeigt schematisch ein Diagramm einer Nitrifikationsphase.

Fig. 3 zeigt schematisch ein Diagramm einer Denitrifikationsphase.

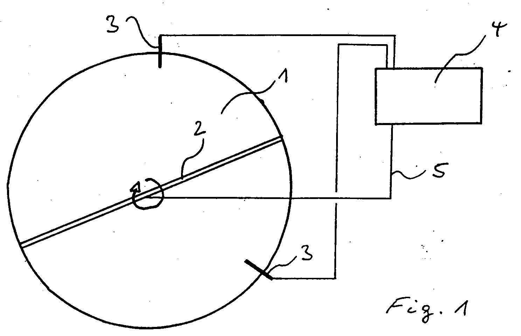

Die in Fig. 1 dargestellte Kläreinrichtung umfaßt ein Klärbecken 1 mit einer als vierstufiges Gebläse 2 ausgebildeten Belüftung. In das Klärbecken 1 ragen zwei Sauerstoffmeßsonden 3, die an eine Recheneinrichtung 4 angeschlossen sind. Von der Recheneinrichtung 4 führt eine Steuerleitung 5 zu dem Gebläse 2. Das Gebläse 2 ist stufenweise zu- und abschaltbar vorgesehen, empfängt über die Steuerleitung 5 entsprechende Signale der Recheneinrichtung 4 und trägt über eine umlaufende Brücke mit Belüftungseinrichtungen den erforderlichen Sauerstoff in das Klärbecken 1 ein. Die Sonden 3 messen die Sauerstoffkonzentration während der Nitrifikationsphase in Zeitintervallen, die durch eine vorgebbare Abtastfrequenz bestimmt sind und leiten entsprechende Signale an die Recheneinrichtung 4, in der diese Werte speicherbar und verarbeitbar sind. Ferner wird jeweils die zu einer Sauerstoffmessung zugehörige Gebläseleistung bzw. eingeschaltete Stufe des Gebläses 2 festgestellt und den gemessenen Werten zugeordnet. Über nicht dargestellte Meßeinrichtungen werden Volumenstrom und Leitfähigkeit des Abwasserzulaufs sowie die Umgebungstemperatur gemessen und der Recheneinrichtung 4 zugeleitet, die diese Werte mit den anderen abrufbar speichert. In der Recheneinrichtung 4 ist ein bibliothekartiger Speicher für eine Vielzahl von Prozeßzuständen vorgesehen, wobei ein Prozeßzustand die Werte für Sauerstoffkonzentration, Gebläseleistung, Volumenstrom, Leitfähigkeit und Umgebungstemperatur umfaßt.

Aus den Prozeßzuständen werden in der Recheneinrichtung 4 Klassen gebildet, die für die Belastung charakteristische Trends enthalten. Hierbei handelt es sich um bestimmte Abschnitte des Sauerstoffkonzentrationsverlaufs, beispielsweise Steigungen, Abnahmen, oder auftretende Krümmungsänderungen, die gruppenartig zusammengefaßt werden.

Der bibliothekartige Speicher wird durch eine über mehrere Phasen von Nitrifikation und Denitrifikation dauernde Aufnahme von Meßwerten aufgefüllt. Die von den Prozeßzuständen umfaßten Werte werden regelmäßig durch Laboranalysewerte für den Ablauf, insbesondere für die Ammoniumkonzentration einer Probe ergänzt, wobei die Laboranalysewerte den anderen Werten in Bezug auf den Zeitpunkt der Probenentnahme zugeordnet werden. In einem einfachen Fall können hierzu auch bereits vorliegende Meßprotokolle herangezogen werden.

Aus einer Vielzahl von gemessenen Werten für Volumenstrom und Leitfähigkeit wird unter Zuordnung der jeweils bestimmten Ammoniumkonzentration ein Kennfeld erstellt. Diesem Kennfeld sind dann bei Vorliegen bekannter Meßwerte für Volumenstrom und Leitfähigkeit zu erwartende Ablaufwerte für Ammonium zu entnehmen. Das Kennfeld wird regelmäßig durch Aufnahme weiterer Ergebnisse aus Probenentnahmen ergänzt bzw. verfeinert.

Von der Recheneinrichtung 4 werden Änderungen der Sauerstoffkonzentration aus aufeinanderfolgenden Meßwerten berechnet. Mit einer berechneten Änderung und der zugeordneten Gebläseleistung wird dann die Belastung bestimmt und mit den entsprechenden, im Speicher der Recheneinrichtung 4 abgelegten Prozeßzuständen korreliert. In Abhängigkeit der auf diese Weise bestimmten Belastung und der Korrelation mit den bereits bekannten Prozeßzuständen wird dann das Gebläse 2 gesteuert.

Zur Ermittlung eines Trends der Belastung werden die berechneten Änderungen der Sauerstoffkonzentration miteinander auf Abweichungen verglichen. Weisen die Änderungen im wesentlichen gleiche Werte auf, so wird auf einen homogenen Trend der Belastung geschlossen und die für diesen Trend einzustellende Gebläseleistung aus einer Korrelation mit den entsprechenden Klassen der Prozeßzustände abgeleitet.

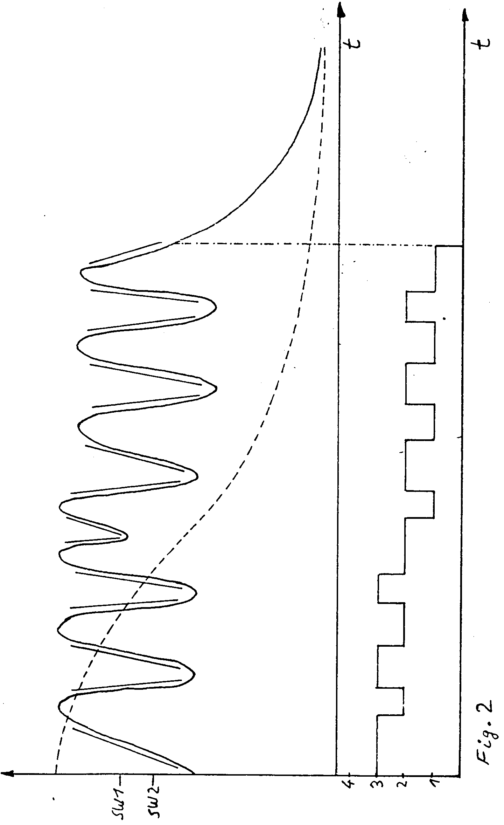

In der Fig. 2 sind die Verläufe der Sauerstoffkonzentration (durchgezogene Linie) und der der Belastung im wesentlichen proportionalen Zehrung (gestrichelte Linie) mit der zugehörigen Gebläsestufung für eine Nitrifikationsphase qualitativ über der Zeit aufgetragen. In einem ersten Zeitabschnitt der Nitrifikationsphase pendelt die Sauerstoffkonzentration in einem Bereich um einen Sauerstoffsollwert SW 1 und in einem zweiten Abschnitt um einen gegenüber SW 1 geringeren Sauerstoffsollwert SW 2, wobei die Zehrung in diesem zweiten Abschnitt gegenüber dem ersten Abschnitt abgenommen hat. In Abhängigkeit der Analyse der Belastung werden die verschiedenen Stufen des Gebläses 2 geschaltet. Wie aus Fig. 2 entnehmbar ist, beginnt das Gebläse 2 in dem ersten Abschnitt mit der Schaltstufe 3 und wechselt mehrmals auf die Schaltstufe 2, wobei die Dauer des Gebläsebetriebs mit der Stufe 2 zunimmt und die Länge mit der Stufe 3 abnimmt. In dem zweiten Abschnitt mit dem geringeren Sauerstoffsollwert SW 2 nimmt die Dauer des Gebläsebetriebs mit Stufe 1 gegenüber der mit Stufe 2 zu.

Zu Beginn der Nitrifikationsphase ist zunächst ein Anstieg der Sauerstoffkonzenztration bei Schaltstufe 3 des Gebläses 2 zu beobachten und die über die Änderungen der Sauerstoffkonzentration und die Gebläseleistung ermittelten Werte für die Zehrung sind hoch. Über die berechneten Änderungen der Sauerstoffkonzentration während dieses Anstiegs wird der Zeitpunkt der Zurückschaltung des Gebläses 2 auf Stufe 2 ermittelt. Mit einer Verzögerung beginnt dann eine Abnahme der Sauerstoffkonzentration. Über die berechneten Änderungen der Sauerstoffkonzentration während dieser Abnahme wird dann der Zeitpunkt der Zuschaltung auf Stufe 3 bestimmt. In Abhängigkeit der ermittelten Belastung bzw. Zehrung ist hierbei die Betriebsdauer des Gebläses 2 mit Stufe 3 gegenüber der ersten Zuschaltung verkürzt. Die Zehrung nimmt bereits deutlich ab.

Nach dem dritten Anstieg der Sauerstoffkonzentration folgt nach Umschaltung des Gebläses 2 von Stufe 3 auf Stufe 2 eine relativ geringe Abnahme der Sauerstoffkonzentration und danach wieder ein Anstieg in den oberen Bereich um den Sauerstoff-Sollwert SW 1 bei gleichbleibender Gebläsestellung. Über die hierbei berechneten Änderungen der Sauerstoffkonzentration wird nun festgestellt, daß die Zehrung gegenüber vorher langsamer abnimmt. In diesem Bereich wird durch die Analyse ein Lastwechsel erkannt. Durch die Schaltung des Gebläses 2 zwischen den Stufen 2 und 1 wird nun der für eine geringe Zehrung ausreichende Sauerstoff-Sollwert SW 2 eingestellt. Schließlich unterschreitet die ermittelte Zehrung bzw. Belastung einen vorgegebenen Grenzwert (GW) und das Gebläse 2 wird abgeschaltet.

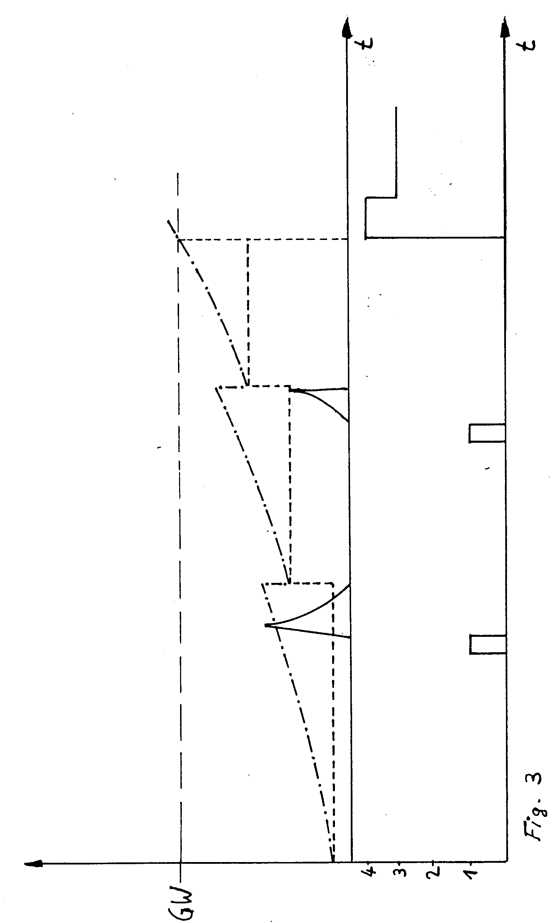

In der Fig. 3 sind die Verläufe der Sauerstoffkonzentration (durchgezogene Linie) und der Zehrung mit der zugehörigen Gebläsestufung in einer Denitrifikationsphase qualitativ über der Zeit aufgetragen. Die strichpunktierte Linie gibt den mit einer Akkumulationsberechnung stückweise ermittelten Verlauf und die gestrichelte Linie den über eine Auswertung von Sprungantworten ermittelten Verlauf der Zehrung wieder.

Über ein kurzzeitiges Zuschalten des Gebläses 2 mit der Stufe 1 wurden zwei Peaks zu einer Analyse des Verlaufs der Sauerstoffkonzentration erzeugt. Für die Zeiträume vor und nach den Zuschaltungen des Gebläses 2 wurden Akkumulationsberechnungen für Ammonium durchgeführt. Der Verlauf der durch eine Auswertung der Sprungantworten ermittelten Zehrung (gestrichelte Linie) ist im wesentlichen treppenartig, wobei die Zehrung bis kurz nach einem Zuschalten des Gebläses hilfsweise als konstant angenommen ist und nach Auswertung der jeweiligen Sprungantwort entsprechend korrigiert bzw. angehoben wird. Überschreitet die über die Analyse der Sprungantworten ermittelte Belastung einen vorgegebenen Grenzwert (GW), wird die Denitrifikationsphase abgebrochen und das Gebläse 2 wieder zugeschaltet.

Bei einer Berücksichtigung der Akkumulationsberechnung (strichpunktierte Linie) kann vor und nach den Sprungantworten interpoliert werden, wobei die Analysen der Sprungantworten als Stützstellen dienen. Hierbei können für Zeiträume vor und nach den zeitlich beabstandeten Sprungantworten Aussagen über die Belastung während der Denitrifikationsphase gemacht werden. Der Verlauf der durch Akummulationsberechnungen aufgefundenen Zehrung ist im wesentlichen linear ansteigend. Überschreitet die über die Akkumulationsberechnungen ermittelte Belastung einen vorgegebenen Grenzwert (GW), wird die Denitrifikationsphase abgebrochen und das Gebläse 2 wieder zugeschaltet. Die Akkumulationsberechnungen werden durch die Analysen der Sprungantworten korrigiert, so daß sich, wie in der Fig. 3 dargestellt, ein im wesentlichen sägezahnartiger Verlauf der Zehrung ergibt.

Eine Denitrifikation kann durch derartige Akkumulationsberechnungen oder die Analyse von Sprungantworten als auch Kombinationen hiervon überwacht und gesteuert werden.

Mit den erfindungsgemäßen Verfahren lassen sich im wesentlichen analog Kläranlagen mit simultaner Betriebsweise steuern. Hierbei korrespondiert die Verweil- bzw. Raumzeit unter Berücksichtigung des jeweils einer Phase zur Verfügung gestellten Beckenvolumens weitgehend der Zeitdauer bei den intermittierend arbeitenden Kläranlagen. Bei einer simultanen Fahrweise wird dann ggf. zusätzlich noch das Rücklaufverhältnis gesteuert. Im allgemeinen wird das Abwasser bei derartigen Kläranlagen erst einer Denitrifikation und anschließend einer Nitrifikation unterzogen. Zur Absenkung des während der Nitrifikation entstehenden Nitrats wird dann ein Rücklauf in den Zulauf zur Dentitrifikation beigemischt. Durch entsprechend in den jeweiligen Zonen vorzusehende oder bereits weitgehend vorhandene Meßeinrichtungen können alle erforderlichen Meßdaten zur Verfügung gestellt werden. Während bei einer intermittierenden Betriebsweise die beiden Phasen lastabhängig vollständig abgebrochen oder fortgeführt werden können, kann bei einer simultanen Betriebsweise das jeweils einer Phase zur Verfügung gestellte Volumen lastabhängig eingestellt werden.

## Patentansprüche

1. Verfahren zum Reinigen von Abwasser mittels Belebtschlamm, wobei eine Messung der Sauerstoffkonzentration im Klärbecken erfolgt und das Abwasser durch Zu- und Abschalten einer Belüftung einer Nitrifikations- und einer Denitrifikationsphase unterworfen wird, dadurch gekennzeichnet, daß die Belastung des Abwassers aus einer Analyse des Verlaufs der Sauerstoffkonzentration und der dem Verlauf zugeordneten Belüftungsleistung ermittelt und die Nitrifikations- und/oder die Denitrifikationsphase in Abhängigkeit der ermittelten Belastung gesteuert wird.

2. Verfahren nach Anspruch 1, dadurch gekennzeichnet, daß die Belastung während einer Phase mehrmals ermittelt wird.

3. Verfahren nach Anspruch 1 oder 2, dadurch gekennzeichnet, daß durch die Analyse ein steigendes, fallendes oder gleichbleibendes Verhalten der Sauerstoffkonzentration festgestellt wird.

4. Verfahren nach einem der Ansprüche 1 bis 3, dadurch gekennzeichnet, daß die Steigung der Sauerstoffkonzentration bestimmt und mit der zugeordneten Belüftungsleistung zu einem Prozeßzustand zusammengefaßt wird.

5. Verfahren nach einem der Ansprüche 1 bis 4, dadurch gekennzeichnet, daß ein die Belastung beschreibender, momentaner Prozeßzustand mit einer Vielzahl von Prozeßzuständen mit jeweils bekannten Ablaufwerten für das gereinigte Abwasser korreliert wird.

6. Verfahren nach einem der Ansprüche 1 bis 5, dadurch gekennzeichnet, daß der Sauerstoff-Sollwert für die Nitrifikationsphase in Abhängigkeit der ermittelten Belastung eingestellt wird.

7. Verfahren nach einem der Ansprüche 1 bis 6, dadurch gekennzeichnet, daß die Belüftung zur Erzeugung einer Sprungantwort der Sauerstoffkonzentration kurzzeitig erhöht wird.

8. Verfahren nach einem der Ansprüche 1 bis 7, dadurch gekennzeichnet, daß eine Sprungantwort der Sauerstoffkonzentration auf kurzzeitiges Zuschalten der Belüftung in der Denitrifikationsphase analysiert wird.

9. Verfahren nach einem der Ansprüche 1 bis 8, dadurch gekennzeichnet, daß die Belastung in der Denitrifikationsphase durch Messung von Volumenstrom und Leitfähigkeit des Abwassers und Vergleich mit bereits gemessenen Werten überwacht wird.

10. Verfahren nach einem der Ansprüche 1 bis 9, dadurch gekennzeichnet, daß die Denitrifikationsphase bei Überschreiten eines aus dem Volumenstrom und der Leitfähigkeit des Abwassers hergeleiteten Akkumulationswertes für die Belastung über einen vorgegebenen Grenzwert abgebrochen wird.

11. Verfahren zur Steuerung einer Denitrifikationsphase bei einer biologischen Abwasserreinigung in einem Klärbecken, dadurch gekennzeichnet, daß Volumenstrom und Leitfähigkeit des Abwassers gemessen werden und durch eine Einordnung der Meßwerte in ein Kennfeld eine Ammoniumkonzentration bestimmt wird, wobei das Kennfeld bereits gemessene Werte für den Volumenstrom und die Leitfähigkeit sowie diesen jeweils zugeordnet analysierte Ammoniumkonzentrationen umfaßt.

12. Verfahren nach einem der Ansprüche 1 bis 11, dadurch gekennzeichnet, daß die Umgebungstemperatur zur Korrektur von Leitfähigkeitsmessungen überwacht wird.
